# EUROPEAN PATENT SPECIFICATION

(11) **EP 2 658 889 B1**
(45) Date of publication and mention of the grant of the patent: **20.04.2016**
(21) Application number: 11725355.9
(22) Date of filing: 21.04.2011
(51) Int. Cl.: C08G 8/34, B24B 23/04

(54) **MODIFIED PHENOLIC RESOL RESIN**
MODIFIZIERTES PHENOLRESOLHARZ
RÉSINE RÉSOL PHÉNOLIQUE MODIFIÉE

(30) Priority: 30.12.2010 TR 201011146
(43) Date of publication of application: 06.11.2013
(73) Proprietor: Cukurova Kimya Endustrisi Anonim Sirketi, 45030 Manisa (TR)
(72) Inventor: OZGURLER, Sara Bilge, 45020 Manisa (TR); DEMIR, Tursen, 35530 Izmir (TR)
(74) Representative: Cayli, Hülya
(86) International application number: PCT/EP2011/056413
(87) International publication number: WO 2012/089351

(56) References cited:
- US-A- 2 347 662
- US-A- 3 870 670

## Description

### TECHNICAL FIELD OF THE INVENTION

The present invention relates to phenolic resol type resins prepared by using polycyclic phenols and the production method thereof.

The present invention relates to improving the characteristics of the phenolic resins used in abrasive emery sector, by using polycyclic phenols. By adding polycyclic phenols to the resin produced for emery in specific conditions and formulations, it has been enabled to provide elasticity to emery cloth or emery paper.

### STATE OF THE ART

The resins of the present invention are prepared for the use in the production of cloth or paper emeries in the abrasive emery sector. The emeries manufactured with the phenolic resole type resins which are prepared by using the polycyclic phenols of the present invention have elastic characteristic.

In the abrasive sector, a highly rigid structure is formed when the cloth or paper emeries are covered with a phenolic resin known in the state of the art. Thus, cracks are observed when the cloth or paper emery is folded or curled. The emeries which are used manually or which are inserted in machines are used by curling.

The emeries manufactured with the resins known in the state of the art are not elastic. Cracks and chippings are formed when the cloth or paper emeries used manually or in machines are buckled or folded and these can not be used since the broken parts can not be inserted in the machine again. The emery either continues to abrade but can not be used because parts fall off or break, or it loses its abrasive features due to the fact that the abrasives which provide the abrasive characteristic fall off. In other words, the emeries become dysfunctional before their shelf lives without losing their useful condition.

The emeries prepared with the resins of the present invention have elastic characteristics.

The resins prepared with polycyclic phenols are used in various sectors, in various forms. These resins are used for improving water impermeability in chipboard sector, for decreasing the free formaldehyde values in manufacturing children's furniture and for plywood production. However in these manufacturing processes, polycyclic phenols are added as additives after the resins are completed physically. In other words, a production is performed where the said effect of the polycyclic phenol and the effect of the resin seem to be physically combined.

US3870670 A discloses aqueous dispersions of thermosetting phenolic resins.

US2347662 A discloses a flexible abrasive article comprising a backing sheet and abrasive particles bonded thereto, the bond comprising a blend of a heat convertible synthetic resin and a volatile organic solvent solution of a film forming thermoplastic resin which is compatible with said heat convertible synthetic resin, the said blend being reacted and polymerizes to a hardened flexible state. The resinous composition is the hardened homogenous product resulting from reacting a drying oil modified alkyd resin with a phenol aldehyde resin.

These documents do not disclose a resin which gives emery paper improved elasticity.

In the product of the present invention, the reactive structure of the polycyclic phenol derivatives have been utilized and a new characteristic which did not exist in the previous ones have been created for the resin by forming a copolymer or numerous various polymeric structures during the manufacturing process of the resin.

Generally the emery manufacturers ovendry the paper or cloth after covering with resin and abrasive material for a pre-curing in order to obtain emery in their systems, wherein the temperature of the oven is about 120 °C. When the resins of the present invention are utilized, temperature in question has been reduced to about 85-90 °C or the same temperature is preserved but the time is shortened and the speed of the band is increased. In other words, because of the gel time of the resin of the present invention being shorter from the gel time of the resins known in the state of the art, both temperature and time are saved during the production. While the gel time of the resins used in the state of the art is approximately 45 mins at about 100°C, the gel time of the phenol resins of the present invention is 12 mins at 120°C.

### BRIEF DESCRIPTION OF THE INVENTION

The objective of the present invention is to develop phenolic resol type resins using polycyclic phenols. These phenolic type resins are appropriate for use in the abrasive sector.

Another objective of the present invention is to make the emery elastic by using phenolic resol type resins which are prepared with polycyclic phenols.

Emery papers or cloths are produced by using the phenolic resins which include polycyclic phenols of the present invention. By adding polycyclic phenols to the resin produced for emery in specific conditions and formulations, it has been enabled to provide elasticity.

### DETAILED DESCRIPTION OF THE INVENTION

The objective of the present invention is to develop phenolic resol type resins used in the abrasive sector, by utilizing polycyclic phenols.

The present invention is related to the production method of the phenolic resol type resins prepared by utilizing polycyclic phenols.

In the present invention, emery cloths or papers are manufactured by using phenolic resins which include polycyclic phenols. These emery papers or cloths which are produced in this way have highly elastic characteristic.

In the present invention, elasticity has been provided to cloth or paper emeries by making a modification on the resin used during their preparation. By adding polycyclic phenols to the resin produced for emery in specific conditions and formulations, it has been enabled to provide elasticity. Furthermore, changes have been made in the emery production conditions when compared to the known state of the art. When the phenolic resin produced via the process of the present invention is used in emery production, capacity has been increased by shortening the emery production time; or energy has been saved by decreasing the curing temperature and the emery production capacity has been increased.

The polycyclic phenols used in phenolic resin production in the present invention are natural extracts obtained from trees, such as acorn tree extract.

In the present invention a new method is used for the production of phenolic resins which include polycyclic phenols. First of all, sufficient amounts of phenol, sodium hydroxide (NaOH), paraformaldehyde and methanol (Met-OH) are loaded into the reactor. The temperature is increased up to 60 - 65 °C. 60 - 90 minutes pass in 60 - 65 °C. The temperature is decreased down to 55°C and a sufficient amount of NaOH is added. The temperature is increased up to 90°C. The mixture is kept between 30 minutes - 3 hours at this temperature. A sufficient amount of urea, a sufficient amount of polycyclic phenol, preferably 1.0 - 40 kg, and water is added. The temperature is decreased down to 55°C and vacuum distillation starts. Diethylenglycol is added and the material which has the appropriate viscosity is unloaded.

Approximately 45 - 47 % phenol, approximately 0,5 - 0,8 % NaOH, approximately 23 - 24 % paraformaldehyde, approximately 0,35 - 0,55 % Met-OH is used during production. The amount of urea is approximately 0.15 - 0.40 % and approximately 10 % water is used.

The resin which is obtained according to the method above has a viscosity of 1800 - 2400 cp at 25°C. The pH value is approximately 8,6 - 9,4 and the density is approximately 1,24 - 1,27 g/cm³ at 20°C. Gel time is approximately 35 - 42 minutes at 100 °C.

## Claims

1. A process for producing phenolic resins which include polycyclic phenol, comprising the steps of:
a) loading phenol, sodium hydroxide (NaOH), paraformaldehyde and methanol (Met-OH) into the reactor,
b) increasing the temperature up to 60 - 65 °C and waiting for 60-90 minutes,
c) decreasing the temperature down to 55°C,
d) adding sodium hydroxide, increasing the temperature up to 90°C and waiting between 30 minutes and 3 hours at this temperature,
e) adding urea, polycyclic phenol, preferably between 1,0 and 40 kg, and water,
f) decreasing the temperature down to 55°C and starting the vacuum distillation,
g) adding diethylenglycol, unloading the material which has the appropriate viscosity and thus, obtaining the phenolic resin.

2. A phenolic resin comprising a polycyclic phenol produced according to the process in Claim 1.

3. A process according to claim 1, **characterized in that** the polycyclic phenol is a natural extract obtained from trees, such as acorn tree extract.

## Patentansprüche

1. Verfahren zur Herstellung von polyzyklisches Phenol enthaltenden Phenolharzen, umfassend die Schritte:
a) Phenol, Natriumhydroxid (NaOH), Paraformaldehyd und Methanol (Met-OH) in den Reaktor zu laden,
b) die Temperatur auf 60-65 °C zu erhöhen und 60-90 Minuten zu warten,
c) die Temperatur auf 55°C zu reduzieren,
d) Natriumhydroxid zuzugeben, die Temperatur auf 90°C zu erhöhen und bei dieser Temperatur zwischen 30 Minuten und 3 Stunden zu warten,
e) Urea, polyzyklisches Phenol, vorzugsweise zwischen 1,0 und 40 kg, und Wasser zuzugeben,
f) die Temperatur auf 55°C zu reduzieren und die Vakuumdestillation zu starten,
g) Diethylenglykol zuzugeben, das Material, das die entsprechende Viskosität hat, abzuladen und so das Phenolharz zu gewinnen.

2. Phenolharz, das ein polyzyklisches Phenol enthält, das gemäß Verfahren in Anspruch 1 hergestellt ist.

3. Verfahren nach Anspruch 1, **dadurch gekennzeichnet, dass** das polyzyklische Phenol ein aus Bäumen gewonnenes natürliches Extrakt ist, wie z.B. ein Eichelbaum-Extrakt.

## Revendications

1. Un procédé de fabrication de résines phénoliques contenant du phénol polycyclique, comprenant les étapes de :
a) chargement du phénol, de l'hydroxyde de sodium (NaOH), du paraformaldéhyde et du méthanol (Met-OH) dans le réacteur,
b) augmentation de la température jusqu'à 60 - 65°C et maintien de la température dans cette plage pendant 60-90 minutes,
c) diminution de la température à 55 °C,
d) addition de l'hydroxyde de sodium, augmentation de la température jusqu'à 90°C, et maintien de la température dans cette valeur entre 30 minutes et 3 heures,
e) addition d'urée, du phénol polycyclique et de l'eau, de préférence entre 1,0 et 40 kg,
f) diminution de la température à 55 °C et distillation sous vide, et
g) addition du diéthylène-glycol, déchargement du matériau ayant la viscosité appropriée, et ainsi obtenir de la résine phénolique.

2. Une résine phénolique contenant d'un phénol polycyclique produite selon le procédé selon la Revendication 1.

3. Un procédé selon la Revendication 1, **caractérisé en ce que** le phénol polycyclique est un extrait naturel obtenu à partir des arbres, tels que l'extrait de chêne.
